# EUROPÄISCHE PATENTSCHRIFT

(11) **EP 0 775 883 B1**
(45) Veröffentlichungstag und Bekanntmachung des Hinweises auf die Patenterteilung: **21.02.2001**
(21) Anmeldenummer: 96117179.0
(22) Anmeldetag: 25.10.1996
(51) Int. Cl.: F27B 17/02, A61C 13/20, F27D 1/18

(54) **Brennofen, insbesondere für dentalkeramische Massen**
Firing furnace, in particular for ceramic dental products
Four de cuisson, en particulier pour des produits dentaires céramiques

(30) Priorität: 17.11.1995 DE 19542984
(43) Veröffentlichungstag der Anmeldung: 28.05.1997
(73) Patentinhaber: IVOCLAR AG, FL-9494 Schaan (LI)
(72) Erfinder: Grünenfelder, Robert, 9490 Vaduz (LI); Mertins, Jürgen, 9473 Gams (CH); Ulbricht, Horst, 9492 Eschen (LI)
(74) Vertreter: Baronetzky, Klaus, Dipl.-Ing.

(56) Entgegenhaltungen:
- DE-A- 2 347 770
- DE-A- 2 632 846
- DE-A- 3 302 679
- DE-A- 4 402 644
- GB-A- 2 201 495
- US-A- 2 506 071

## Beschreibung

Die Erfindung betrifft einen Brennofen, insbesondere für Dentalkeramiken, gemäß dem Oberbegriff von Anspruch 1.

Ein derartiger Brennofen ist beispielsweise aus der DE-PS 26 32 846 bekannt. Dieser Ofen hat den Vorteil, daß er vergleichsweise einfach aufgebaut ist, und auch von der Bedienung her einfach gehalten ist. Dennoch hat er sich über die Jahrzehnte hinweg beim Brennen von unterschiedlichen Dentalkeramiken bewährt.

Ferner sind seit mehreren Jahrzehnten Brennöfen an sich bekannt, bei denen der Oberteil vertikal nach oben gefahren wird. Ein Beispiel hierfür ist aus der DE-AS 25 43 175 ersichtlich. Derartige mit Tragsäulen ausgestatte Brennöfen weisen jedoch den Nachteil auf, daß der Oberteil ziemlich weit nach oben bewegt werden muß, um den erforderlichen freien Zugang zum Brenngut zu ermöglichen. Dies bedingt einen hohen Schwerpunkt des Brennofens in geöffnetem Zustand, wobei es aus Gründen der Betriebssicherheit dann erforderlich ist, eine entsprechend große Aufstandsfläche zu wählen, die den gesamten Ofen unhandlicher macht und eine geringere Akzeptanz bei Dentallabors bedingt.

Auch aus ergonomischer Sicht ist der Tragsäulenofen ungünstig, denn für den Bediener ist nicht ohne weiteres ersichtlich, cb der mit Heizelementen ausgestatte Oberteil noch rotglühend oder bereits abgekühlt ist. Durch die Entfernung vom Oberteil müßten für die Erkennung der Rotglut praktisch regelrechte Spiegel angebracht werden, die jedoch besonders temperaturbeständig sein müßten, was insofern einen weiteren Nachteil gegenüber den Schwenkbrennöfen wie beispielsweise gemäß der DE-PS 26 32 846 darstellt. Durch die mangelnde augenblickliche Erkennbarkeit besteht daher auch eine gewisse Verbrennungsgefahr für den Bediener.

Die gattungsgemäßen Brennöfen weisen einen Unterteil mit im wesentlichen planer Oberfläche und einen Oberteil auf, das die Heizelemente und damit den eigentlichen Brennraum aufweist. Beim Öffnen des Brennofens durch eine Schwenkbewegung verbleibt jedoch der hintere Bereich des Oberteils in unmittelbarer Nachbarschaft des Oberteils, so daß dieser hintere Bereich auch nach einer Abkühlphase noch ziemlich warm verbleibt, während der vordere Bereich rasch abkühlt. Dies bedingt ein entsprechend ungleiches Abkühlen der Muffel, die für das Brenngut verwendet wird, so daß für den unerfahrenen Bediener Verbrennungsgefahr besteht, der annimmt, daß die gesamte Muffel bereits kalt ist, wenn der vordere Bereich kalt ist.

Demgegenüber liegt der Erfindung die Aufgabe zugrunde, einen Brennofen gemäß dem Oberbegriff von Anspruch 1 zu schaffen, der hinsichtlich der Handhabung weiter verbessert ist, eine nach Wunsch rasche und/oder gleichmäßige Abkühlung des Brennguts erlaubt, chne daß der Oberteil zu sehr abkühlt und dennoch eine einfache Herstellung mit guter Akzeptanz beim Kunden verbindet.

Diese Aufgabe wird erfindungsgemäß durch Ansprüche 1 und 10 gelöst, Vorteilhafte Weiterbildungen ergeben sich aus den Unteransprüchen.

Der erfindungsgemäße Brennofen bietet den überraschenden Vorteil, daß trotz Schrägstellung des Oberteils in der offenen Stellung des Brennofens die Muffel oder das anderweitig einzusetzende Brenngut überraschend gleichmäßig und rasch abkühlt, so daß die Verbrennungsgefahr für den unerfahrenen Benutzer stark reduziert wird. Offenbar stellt sich durch den aufgrund des Hublagers auch hinten angehobenen Oberteil eine besonders günstige Luftströmung durch den sich zwischen Ober- und Unterteil erstreckenden Schlitz ein, die die Abkühlung begünstigt. Hierbei kommt dem Luftstrom aus strömungstechnischer Sicht zugute, daß der Brennraum des Oberteils noch ziemlich heiß ist, so daß unterhalb des Brennraums durch die von dort aufsteigende Luft ein Unterdruck entsteht, der die Luftströmung fördert. Durch die Luftströmung wird die Muffelkühlphase abgekürzt, so daß der Oberteil weniger stark auskühlt.

Überraschend ist bereits ein Schlitz von beispielsweise 30 mm ausreichend, um die gewünschte Wirkung zu erzielen. Es versteht sich aber, daß die Hubhöhe in weiten Bereichen an die Erfordernisse angepaßt werden kann. Entweder wird die für die kombinierte Bewegung eingesetzte Kurvensteuerung durch Austausch der entsprechenden Kurvenplatte mit der Steuerungskontur ausgetauscht oder der Unterteil wird - soweit es die Brenngutauflage betrifft - vertikal beweglich gelagert.

Bei einer alternativen Ausgestaltung der Erfindung ist es vorgesehen, den Oberteil schwenkbeweglich zu lagern und den Unterteil über das Hublager abzusenken, so daß der erwünschte Schlitz entsteht. Die Bewegungen können in jedem Fall von einer einzigen Steuereinrichtung gesteuert werden.

Besonders günstig ist es, daß durch die Schwenkbewegung in Verbindung mit der Vertikalbewegung der Schwerpunkt des Ofens doch vergleichsweise niedrig bleibt, so daß er auch bei einer Aufstandsfläche, die innerhalb der Abmessungen des Unterteils verbleibt, nicht kippgefährdet ist.

Gemäß einer vorteilhaften Ausgestaltung ist es vorgesehen, seitlich Abstellplatten an dem Unterteil anzubringen. Diese stören die Luftströmung nicht und können dennoch die Handhabung erheblich vereinfachen, nachdem es möglich ist, Brenngut kurzerhand auf die Abstellplatte zu schieben und gleich das nächste, vorbereitete Brenngut auf die Stellfläche für den Brennraum einzusetzen und den Ofen sogleich weiterarbeiten zu lassen.

Die Steuereinrichtung kann entweder manuell betätigt werden, wobei es günstig ist, wenn das Gewicht des Oberteils zumindest nahezu von mindestens einer Feder kompensiert wird. Es ist dann eine leichte Handhabung des Oberteils möglich, und es läßt sich ohne weiteres eine Rastung in der obersten, offenen Stellung des Brennofens, und bei Bedarf auch ein Verschluß in der geschlossenen Stellung, der Brennstellung des Brennofens realisieren.

Gemäß einer vorteilhaften Verwendung des erfindungsgemäßen Brennofens läßt sich die Hubbewegung zur Erzielung definierter Brennzyklen einsetzen. Beispielsweise kann der Oberteil zunächst vertikal angehoben werden, um ein gleichmäßiges Vortrocknen des Brennguts und der Isoliersteine zu garantieren. Wenn eine gleichmäßige Abkühlung wichtig ist, kann das Brenngut zunächst in der Stellung der maximalen Hubbewegung belassen werden. Je nach dem ausgewählten Brenngut bzw. den Materialeigenschaften kann gezielt langsamer oder schneller abgekühlt werden, wobei es sich auch versteht, daß die Hubbewegung über die Steuereinrichtung und ein entsprechendes Programm gesteuert werden kann. Dann können beispielsweise individuelle Vortrocknungsstufen über die Höhe der Hubbewegung realisiert werden; beispielsweise ergibt die Halbierung der Aufwärtsbewegung ein entsprechend langsameres Abkühlen.

Dennoch läßt sich die Hub- und die Schwenkbewegung sehr einfach steuern. In einer Ausführungsform wird hierzu einfach ein Kraftzylinder, der unten schwenkbeweglich gelagert ist, mit einer ebenfalls beweglich gelagerten Kurvenscheibe oder -platte kombiniert. Sobald in dem Profil der Kurvenscheibe ein Mitnehmer die oberste Vertikalposition erreicht, wird durch die weitere Streckbewegung des Kraftzylinders die Schwenkbewegung entsprechend dem Kurvenverlauf eingeleitet. Damit läßt sich die erfindungsgemäße Steuerung auch mit lediglich einem einzigen Antrieb realisieren. Diese Anordnung ergibt zudem den Vorteil, daß der Oberteil leicht abnehmbar ist, was für Wartungsund Reparaturzwecke ausgesprochen günstig ist.

Gemäß einer weiteren vorteilhaften Ausgestaltung ist eine Tastatur vorgesehen, die nicht im Unterteil des Ofens integriert ist, sondern in ihrer Neigung schwenkbar ist. In diesem Zusammenhang ist es besonders günstig, daß die Tastatur dann so schwenkbar ist, daß sie bei der maximalen Schwenkbewegung des Oberteils mit ihrer Oberfläche im Winkel von 90° zu der Unterseite des Oberteils steht. In dieser Stellung wird sie durch die Wärmestrahlung des Oberteils nicht erwärmt, was hinsichtlich der Bedienung und von der Akzeptanz her ebenfalls günstig ist. Zudem kann der Bediener die Tastatur seinen Wünschen entsprechend einstellen, was der Ergonomie der Bedienung zugute kommt, aber auch die Ablesbarkeit etwaiger dort angebrachter Displays erleichtert.

Weitere Einzelheiten, Vorteile und Merkmale ergeben sich aus der nachfolgenden Beschreibung eines Ausführungsbeispiels anhand der Zeichnung.

Es zeigen:
- Fig. 1: eine Ansicht einer Ausführungsform des erfindungsgemäßen Ofens von vorne, und zwar in geschlossenem Zustand des Brennofens;
- Fig. 2: den Brennofen in der Ausführungsform gemäß Fig. 1, jedoch in einer Seitenansicht;
- Fig. 3: eine Draufsicht auf den Brennofen gemäß Fig. 1;
- Fig. 4: eine Ansicht der Ausführungsform des erfindungsgemäßen Brennofens gemäß Fig. 1, jedoch in der Stellung der maximalen Hubbewegung;
- Fig. 5: den Brennofen gemäß Fig. 1 in der maximalen Öffnungsstellung;
- Fig. 6: eine Seitenansicht der schwenkbaren Tastatur für die in Fig. 1 dargestellte Ausführungsform eines erfindungsgemäßen Brennofens; und
- Fig. 7, 8 und 9: schematische Ansichten eines Kraftzylinders zur Betätigung der Lagereinrichtung für den in Fig. 1 dargestellten erfindungsgemäßen Brennofen.

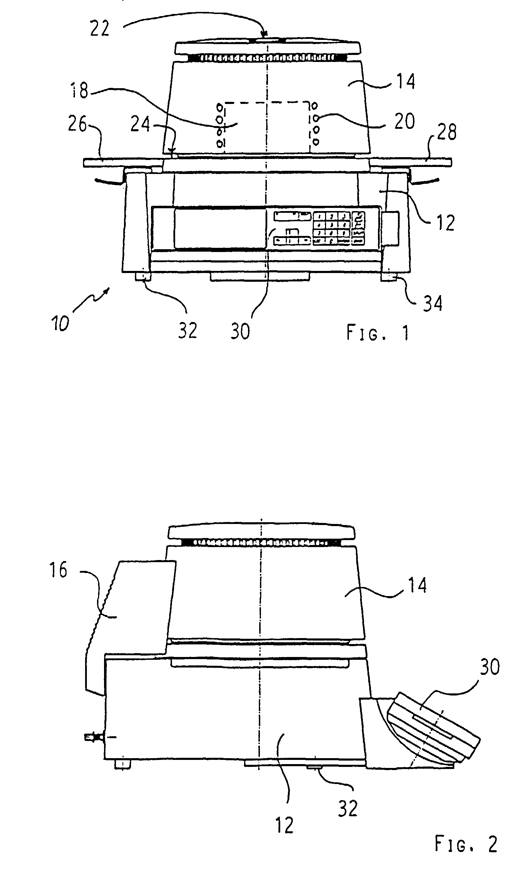

Der in Fig. 1 dargestellte Brennofen 10 weist einen Unterteil 12 und einen Oberteil 14 auf, die über. eine Lagereinrichtung 16 miteinander verbunden sind. Der Unterteil 12 weist eine flache Oberfläche mit einem integrierten Brenngutsockel auf, der an sich bekannt ist und keiner näheren Darstellung und Erläuterung bedarf. Demgegenüber weist der Oberteil 14 einen Brennraum 18 auf, der mit Heizelementen 20 ausgestattet ist und sich oberhalb des Brenngutsockels erstreckt.

Der Oberteil 14 weist ferner ein Sichtfenster 22 auf, das eine Beobachtung des Brennguts auch während des Brennvorgangs erlaubt.

Seitlich einer Oberfläche 24 des Unterteils 12 erstrecken sich wärmegedämmte Abstellplatten 26 und 28, die der vorübergehenden Ablage des Brennguts - entweder für einen neuen Brenngutzyklus oder für das Abkühlen - dienen. Die Ausgestaltung der Abstellplatten 26 und 28 ist besser aus Fig. 3 ersichtlich.

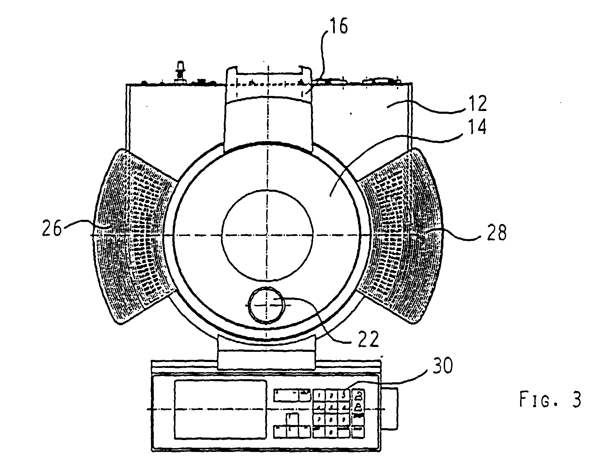

Der Unterteil 12 weist ferner eine Tastatur 30 auf, die geneigt schwenkbar gelagert ist, wie es besser aus Fig. 2 ersichtlich ist. Ferner ist der Unterteil 12 in an sich bekannter Weise mit Stellfüßen versehen, von denen zwei Stellfüße 32 und 34 aus Fig. 1 ersichtlich sind und ziemlich weit außen angeordnet sind, um eine sichere Standfläche zu bilden.

Wie aus Fig. 2 ersichtlich ist, ist die Lagereinrichtung 16 ziemlich massiv ausgebildet und bietet eine sichere Abstützung für den Oberteil 14. Es ist möglich, die Lagereinrichtung 16 je aus zwei voneinander beabstandeten Lagerlaschen auszubilden, die einerseits eine große Stabilität auch gegen seitliche Belastung aufweisen, andererseits jedoch die Abkühlung praktisch gar nicht behindern. Die Lagereinrichtung 16 weist zudem eine Steuereinrichtung auf, die die gewünschte Hubbewegung und Schwenkbewegung des Oberteils 14 gegenüber dem Unterteil 12 gezielt steuert, und zwar je nach dem über die Tastatur 30 eingegebenen Programm.

Wie aus Fig. 3 ersichtlich ist, ist die Tastatur 30 von dem Unterteil 12 etwas beabstandet, obwohl sie unverlierbar eine bauliche Einheit bildet. Die thermische Trennung erlaubt eine angenehmere Bedienung, wobei durch die Schwenkbeweglichkeit der Tastatur 30 eine ergonomisch günstige Ausrichtung möglich ist.

Wie aus Fig. 3 ebenfalls ersichtlich ist, ist das Sichtfenster 22 am vorderen Rand des Oberteils 14 angebracht, was den Einblick durch den Bediener des Ofens erleichtert.

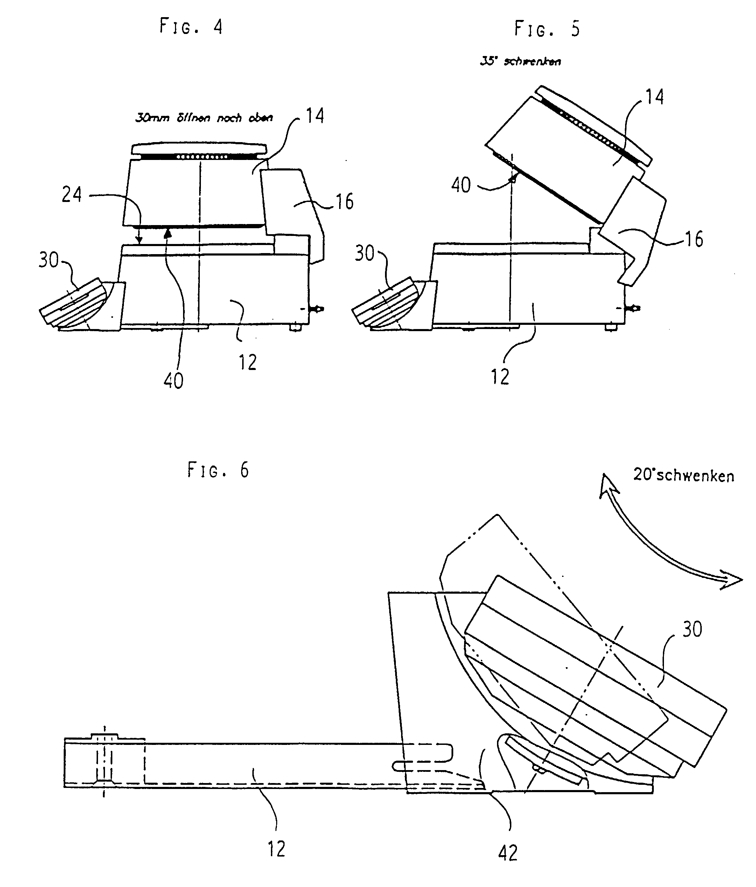

Während in den Fig. 1 bis 3 der in der beispielhaften Ausführungsform vorliegende erfindungsgemäße Brennofen 10 in geschlossenem Zustand dargestellt ist, zeigt Fig. 4 den Brenncfen nach Betätigung der Steuereinrichtung zur Ansteuerung des Hublagers. In diesem Zustand erstreckt sich der Oberteil 14 im wesentlichen parallel zur Oberfläche 24 des Unterteils 12, mit seiner Unterseite 40 jedoch beabstandet von dieser. Je nach dem über die Tastatur 30 gewählten Programm kann beispielsweise eine Vorkühlphase in dieser Position eingehalten werden, die es ermöglicht, daß ein Teil der hier nicht dargestellten Muffel sich noch innerhalb des Brennraums 18 befindet, ein Teil jedoch bereits abkühlt. Gewünschtenfalls kann so eine langsame und gleichmäßige Abkühlung des Brennguts gewährleistet werden.

Die in Fig. 5 dargestellte Stellung des Brennofens erlaubt demgegenüber einen leichten Zugang des Bedieners zum Brenngut in der vollständig geöffneten Stellung des Brennofens. In dieser Stellung ist der Oberteil 14 sowohl maximal angehoben als auch maximal aufgeschwenkt. Das Brenngut kühlt rasch fertig ab, nachdem die Luftströmung durch den immer noch heißen Brennraum verstärkt wird. Der erfindungsgemäße Brennofen 10 läßt sich somit in weiten Bereichen an die Abkühl- und Vortrocknungserfordernisse der verwendeten Dentalkeramiken oder anderer Dentalmaterialien anpassen.

Wie aus Fig. 6 ersichtlich ist, ist die schwenkbewegliche Lagerung der Tastatur in einfacher Weise realisierbar. Die Tastatur weist eine konvex gewölbte Rückseite auf, und ein Tastaturlager 42 weist eine konkave Oberfläche auf, die in ihrem Radius an die konvexe Tastaturrückseite angepaßt ist. Die Oberfläche weist einen Schlitz auf, der von einem Schraubbolzen mit einer Haltescheibe durchtreten wird, der an der Tastaturrückseite eingeschraubt ist. Auf diese Weise ist die Tastatur mit einfachen Mitteln unverlierbar, aber dennoch schwenkbeweglich und beabstandet von dem Unterteil gelagert.

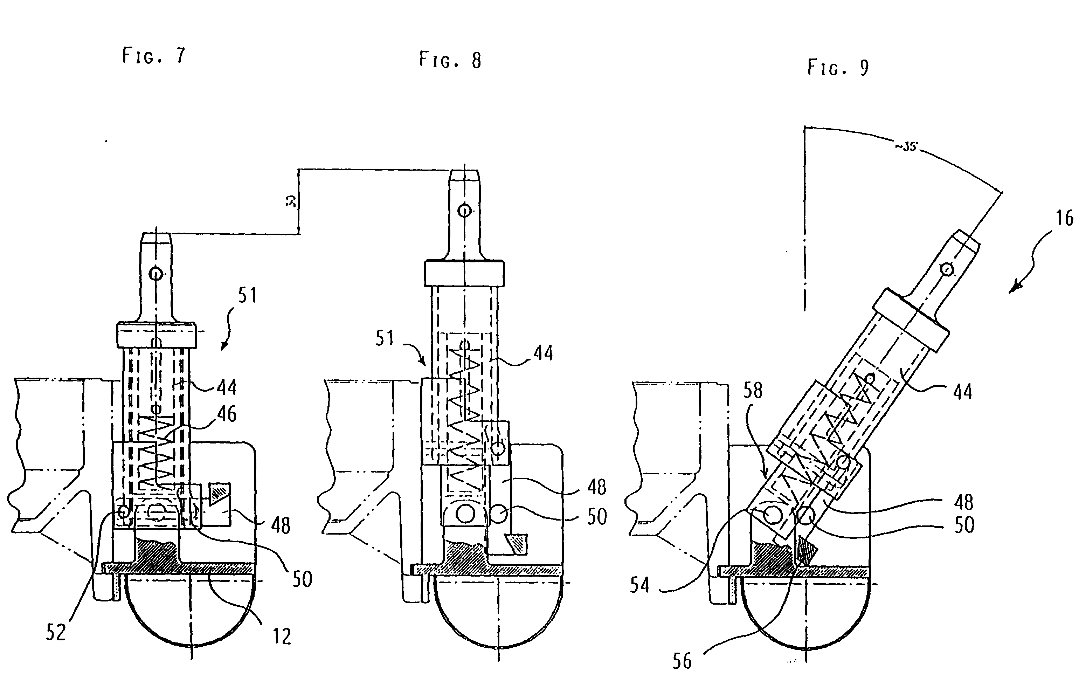

Die Fig. 7 bis 9 zeigen einen Teil der hier nicht weiter dargestellten Steuereinrichtung für die Realisierung der erfindungsgemäßen Lagereinrichtung. Der Kraftzylinder 44 ist in Fig. 7 in dem eingezogenen Zustand dargestellt, in welchem eine Feder 46 maximal komprimiert ist. Eine Steuerscheibe 48 erstreckt sich im wesentlichen horizontal. Sie ist an einem Lagerzapfen 50 schwenkbeweglich gelagert und wird über einen Führungszapfen 52 von dem beweglichen Teil des Kraftzylinders 44 mitgenommen. Wie sich aus dem Vergleich der Fig. 7 und 8 ergibt, wird die Steuerscheibe 48 beim Ausfahren des Kraftzylinders 44 verschwenkt, und zwar bis in die vertikale Position, in welcher eine weitere translatorische Verlagerung zwischen dem Lagerzapfen 50 und dem Führungszapfen 52 nicht mehr möglich ist. Die Abmessungen sind so gewählt, daß dieser Hub des Kraftzylinders 44 dem gewünschten Hub des Vertikal- oder Hublagers entspricht. Insofern bildet die Lagereinrichtung mit diesen Elementen ein Hublager 51 aus.

Ein weiteres Ausfahren des Kraftzylinders führt daher dazu, daß der Kraftzylinder selbst, der an einem Schwenklager 54 schwenkbeweglich gelagert ist, seitlich verschwenkt wird, und zwar zusammen mit der Steuerscheibe 48. Die Steuerscheibe 48 weist an ihrem unteren Ende zudem einen Anschlag 56 auf, der gegen das Unterteil 12 wirkt und die Schwenkbewegung begrenzt. In dem dargestellten Ausführungsbeispiel entspricht die Schwenkbewegung zwar einem Schwenkbereich von 35°, und das Schwenklager 54 wirkt zugleich als Gelenk 58 der Lagereinrichtung 16.

Es versteht sich, daß durch Austausch der Steuerscheibe 48 sowohl die Hubbewegung von etwa 30 mm als auch die Schwenkbewegung in weiten Bereichen an die Erfordernisse anpaßbar sind.

## Patentansprüche

1. Brennofen, insbesondere für dentalkeramische Massen, mit einem Unterteil mit Brenngutsockel und einem Oberteil mit Brennraum, der an dem Unterteil über eine Lagereinrichtung gelagert ist, die mindestens ein Gelenk für die schwenkbewegliche Lagerung des Oberteils am Unterteil aufweist, dadurch **gekennzeichnet,** daß die Lagereinrichtung (16) ein Hublager (51) aufweist, über welches der Oberteil (14) anhebbar ist und welches mit dem Gelenk (58), über welches der Oberteil (14) nach oben schwenkbar ist, zusammenwirkt, wobei im angehobenen Zustand des Oberteils ein Kühlschlitz für die Abkühlung des Brennguts ausgebildet ist.

2. Brennofen nach Anspruch 1, dadurch gekennzeichnet, daß eine Steuereinrichtung vorgesehen ist, über welche beim Öffnen des Ofens (10) zunächst das Hublager (51) und dann das Gelenk (58) ansteuerbar ist.

3. Brennofen nach einem der vorhergehenden Ansprüche, dadurch gekennzeichnet, daß mit dem Hublager (51) eine Hubbewegung ausführbar ist, die erheblich geringer als die für das Öffnen des Ofens (10) erforderliche Bewegung ist und insbesondere etwa 10 bis 50 mm, bevorzugt etwa 30 mm beträgt.

4. Brennofen nach einem der vorhergehenden Ansprüche, dadurch gekennzeichnet, daß das Gelenk (58) Anschläge (56) aufweist, die eine Schwenkbewegung des Oberteils (14) relativ zu dem Unterteil (12) begrenzen, insbesondere von der horizontalen Stellung in eine Stellung von etwa 35° bezogen auf die horizontale Stellung.

5. Brennofen nach einem der vorhergehenden Ansprüche, dadurch gekennzeichnet, daß eine Steuereinrichtung für die Steuerung der Hub- und der Schwenkbewegung der Lagereinrichtung (16) eine Antriebsvorrichtung (44) für das Anheben des Oberteils (14) und/oder das Aufschwenken des Oberteils (14) aufweist, die ein motorisches Öffnen des Oberteils (14) erlaubt.

6. Brennofen nach einem der vorhergehenden Ansprüche, dadurch gekennzeichnet, daß die Steuereinrichtung einen Elektromotor und eine Kurvensteuerung aufweist, die beim Antrieb des Elektromotors in Richtung Öffnen den Oberteil (14) zunächst eine Hubbewegung und dann eine Schwenkbewegung ausführen läßt.

7. Brennofen nach einem der vorhergehenden Ansprüche, dadurch gekennzeichnet, daß die Lagereinrichtung mindestens eine Feder (46) aufweist, die auf das Schwenklager (58) und/oder das Hublager (51) wirkt und das Gewicht des Oberteils (14) im wesentlichen kompensiert.

8. Brennofen nach einem der vorhergehenden Ansprüche, dadurch gekennzeichnet, daß der Brennofen (10) seitlich der Oberfläche (24) des Unterteils (12) sich im wesentlichen bündig anschließende Abstellplatten (26, 28), insbesondere aus einem wärmedämmenden Material, aufweist.

9. Brennofen nach einem der vorhergehenden Ansprüche, dadurch gekennzeichnet, daß an der Vorderseite des Unterteils (12) eine Bedienungstastatur (30) für den Brennofen (10) schwenkbeweglich angebracht ist, wobei insbesondere der Bewegungsweg der Tastatur (30) eine Position einschließt, in welcher sich die Tastatur (30) im rechten Winkel zur Unterseite des Oberteils (14) in der geöffneten und aufgeschwenkten Stellung erstreckt.

10. Verfahren zur Erwärmung und Abkühlung von Brenngut in einem Brennofen nach einem der Ansprüche 1-9, der aus einem Unterteil mit Brenngutsockel und einem Oberteil mit Brennraum besteht, wobei der Oberteil über eine Lagereinrichtung mit einem Gelenk an dem Unterteil gelagert ist, dadurch gekennzeichnet, daß für das Abkühlen des Brennguts der Oberteil über ein Hublager, das mit dem Gelenk zusammenwirkt, in eine nach oben verlagerte Stellung angehoben und heraufgeschwenkt wird und durch die Wärme des Brennraums oberhalb des Kühlschlitzes Unterdruck erzeugt wird, der eine beschleunigte Luftströmung bereitstellt.

## Claims

1. A kiln, in particular for dental ceramic compounds, having a lower part with a base for the material being fired and having an upper part with a firing chamber, which is mounted on the lower part via a bearing means which has at least one hinge for the pivotal mounting of the upper part on the lower part, characterised in that the bearing means (16) has a lift mounting (51) by way of which the upper part (14) can be raised and which co-operates with the hinge (58), by way of which the upper part (14) can pivot upwardly, wherein in the raised position of the upper part a cooling slot is formed for cooling the material being fired.

2. A kiln according to claim 1, characterised in that a control device is provided by way of which, upon opening the kiln (10), firstly the lift mounting (51) and then the hinge (58) can be actuated.

3. A kiln according to any one of the preceding claims, characterised in that a lifting movement can be carried out with the lift mounting (51), which is considerably smaller than the movement required for opening the kiln (10) and, in particular, is approximately 10 to 50 mm, preferably approximately 30 mm.

4. A kiln according to any one of the preceding claims, characterised in that the hinge (58) has stop members (56) which limit pivotal movement of the upper part (14) relative to the lower part (12), particularly from a horizontal position into a position of approximately 35° in relation to the horizontal position.

5. A kiln according to any one of the preceding claims, characterised in that a control device for controlling the lifting movement and pivoting movement of the bearing means (16) has a drive device (44) for raising the upper part (14) and/or pivoting up the upper part (14), which makes possible motorised opening of the upper part (14).

6. A kiln according to any one of the preceding claims, characterised in that the control device has an electric motor and a cam control which, when the electric motor is being driven in the opening direction, allows the upper part (14) firstly to carry out a lifting movement and then a pivoting movement.

7. A kiln according to any one of the preceding claims, characterised in that the bearing means has at least one spring (46) which acts on the pivot bearing (58) and/or the lift mounting (51) and substantially compensates for the weight of the upper part (14).

8. A kiln according to any one of the preceding claims, characterised in that laterally of the surface (24) of the lower part (12) the kiln (10) has flush-mounted stop plates (26,28), in particular consisting of a thermally insulating material.

9. A kiln according to any one of the preceding claims, characterised in that an operating keyboard (30) for the kiln (10) is pivotably mounted on the front side of the lower part (12), wherein in particular the path of movement of the keyboard (30) includes a position in which the keyboard (30) extends at right angles to the underside of the upper part (14) in the open and pivoted-up position.

10. A method of heating and cooling material to be fired in a kiln according to any one of the claims 1 to 9, which comprises a lower part with a base for the material being fired and an upper part with a firing chamber, wherein the upper part is mounted on the lower part via a bearing means with a hinge, characterised in that for cooling the material being fired the upper part is raised and pivoted up into an upwardly shifted position via a lift mounting which co-operates with the hinge, and by the heat of the firing chamber above the cooling slot an underpressure is created which provides an accelerated air flow.

## Revendications

1. Four de cuisson, en particulier pour des produits dentaires céramiques, comprenant une partie inférieure avec (un) socle pour produit à cuire et une partie supérieure avec (une) chambre de cuisson, qui est montée sur la partie inférieure par l'intermédiaire d'un dispositif de montage qui présente au moins une articulation pour le montage pivotant de la partie supérieure sur la partie inférieure, caractérisé en ce que le dispositif de montage (16) présente un palier de levage (51) par l'intermédiaire duquel la partie supérieure (14) peut être soulevée et qui coopère avec l'articulation (58) par l'intermédiaire de laquelle la partie supérieure (14) peut pivoter vers le haut, une fente de refroidissement pour le refroidissement du produit de cuisson étant formée lorsque la partie supérieure est soulevée.

2. Four de cuisson selon la revendication 1, caractérisé en ce qu'il est prévu un dispositif de commande par l'intermédiaire duquel, lors de l'ouverture du four (10), on peut commander dans un premier temps le palier de levage (51) puis l'articulation (58).

3. Four de cuisson selon l'une des revendications précédentes, caractérisé en ce que le palier de levage (51) permet d'exécuter un mouvement de levage qui est beaucoup moins important que le déplacement nécessaire pour l'ouverture du four (10) et représente en particulier environ 10 à 50 mm, de préférence environ 30 mm.

4. Four de cuisson selon l'une des revendications précédentes, caractérisé en ce que l'articulation (58) présente des butées (56) qui limitent un mouvement de pivotement de la partie supérieure (14) par rapport à la partie inférieure (12), en particulier de la position horizontale à une position d'environ 35° par rapport à la position horizontale.

5. Four de cuisson selon l'une des revendications précédentes, caractérisé en ce qu'un dispositif de commande pour la commande du mouvement de levage et du mouvement de pivotement du dispositif de montage (16) comporte un dispositif d'entraînement (44) pour soulever la partie supérieure (14) et/ou faire pivoter vers le haut la partie supérieure (14), lequel dispositif d'entraînement permettant une ouverture motorisée de la partie supérieure (14).

6. Four de cuisson selon l'une des revendications précédentes, caractérisé en ce que le dispositif de commande comporte un moteur électrique et une commande à came qui, lors de l'entraînement du moteur électrique dans le sens de l'ouverture, fait exécuter à la partie supérieure (14) tout d'abord un mouvement de levage puis un mouvement de pivotement.

7. Four de cuisson selon l'une des revendications précédentes, caractérisé en ce que le dispositif de montage comporte au moins un ressort (46) qui agit sur le palier de pivotement (58) et/ou sur le palier de levage (51) et compense sensiblement le poids de la partie supérieure (14).

8. Four de cuisson selon l'une des revendications précédentes, caractérisé en ce que le four de cuisson (10) présente, sur le côté de la surface (24) de la partie inférieure (12), des plaques de support (26, 28) qui se raccordent sensiblement au même niveau et sont en particulier en un matériau calorifuge.

9. Four de cuisson selon l'une des revendications précédentes, caractérisé en ce qu'un clavier de commande (30) pour le four de cuisson (10) est monté pivotant sur la face avant de la partie inférieure (12), la course de déplacement du clavier (30) incluant en particulier une position dans laquelle le clavier (30) s'étend à angle droit par rapport à la face inférieure de la partie supérieure (14) dans la position ouverte et pivotée vers le haut.

10. Procédé pour chauffer et refroidir un produit à cuire dans un four de cuisson selon l'une des revendications 1 à 9 qui est formé d'une partie inférieure avec un socle pour produit à cuire et d'une partie supérieure avec une chambre de cuisson, la partie supérieure étant montée sur la partie inférieure par l'intermédiaire d'un dispositif de montage avec une articulation, caractérisé en ce que pour le refroidissement du produit de cuisson, on soulève et on fait pivoter vers le haut la partie supérieure par l'intermédiaire d'un palier de levage qui coopère avec l'articulation, et on produit par la chaleur de la chambre de cuisson au-dessus de la fente de refroidissement une dépression qui fournit une circulation d'air accélérée.
